# EUROPEAN PATENT SPECIFICATION

(11) **EP 3 200 624 B1**
(45) Date of publication and mention of the grant of the patent: **01.11.2023**
(21) Application number: 15790270.1
(22) Date of filing: 28.09.2015
(51) Int. Cl.: A24B 3/18, A24B 15/16

(54) **RECOVERY OF TOBACCO CONSTITUENTS FROM PROCESSING**
RÜCKGEWINNUNG VON TABAKBESTANDTEILEN AUS DER VERARBEITUNG
RÉCUPÉRATION DE CONSTITUANTS DE TABAC ISSUS DU TRAITEMENT

(30) Priority: 30.09.2014 US 201462057580 P; 30.09.2014 EP 14187195
(43) Date of publication of application: 09.08.2017
(73) Proprietor: Philip Morris Products S.A., 2000 Neuchâtel (CH)
(72) Inventor: BESSO, Clement, CH-2000 Neuchatel (CH)
(74) Representative: Millburn, Julie Elizabeth
(86) International application number: PCT/IB2015/057428
(87) International publication number: WO 2016/051334

(56) References cited:
- EP-A1- 0 015 660
- EP-A1- 1 618 803
- US-A- 4 377 173
- US-A1- 2010 037 903
- US-A1- 2014 261 490

## Description

This disclosure relates to, among other things, recovery of tobacco constituents or reaction products of constituents that are volatilized during processing of tobacco. The recovered constituents or reaction products can be added to compositions, such as aerosol-generating compositions for use in heated aerosol-generating smoking devices, to provide flavor or other desired attributes to the compositions.

Electronic cigarettes (or "e-cigarettes") have been developed as an alternative to traditional cigarettes as a means for volatizing active components, such as nicotine, for inhalation without combustion, while at the same time providing the user with an oral experience similar to that of traditional cigarette smoking. Many current e-cigarettes use a liquid (an "e-liquid") containing nicotine as the only component that is derived from tobacco. However, such e-liquids are often not capable of providing flavor or other sensory attributes of traditional smoking articles such as cigarettes. Accordingly, it may be desirable to include tobacco flavorants in e-liquids for use in e-cigarettes.

Volatile tobacco constituents may be lost during processing of tobacco. For example, processing of tobacco to form expanded tobacco, such as dry ice expanded tobacco ("DIET"), can result in volatilization of tobacco-derived compounds that are rich in tobacco alkaloids. In such processes, the volatilized tobacco-derived compounds are typically carried in a waste gas stream and incinerated to produce energy for the tobacco expansion process. During such processes, some compounds can react to form reaction products that are also carried in the waste gas stream and incinerated. Some of these reaction products are produced via Maillard reactions between reducing sugars and tobacco alkaloids and contribute to the flavor of tobacco when it is being smoked.

EP 0 015 660 A1 and US 4,377,173 disclose methods and apparatus for expanding tobacco in which tobacco containing solid carbon dioxide is heated in an expansion chamber to expand the tobacco by sublimation of the solid carbon dioxide. Carbon dioxide gas, together with volatilised water and organic materials, are evolved from tobacco into the expansion chamber to form a high thermal diffusivity atmosphere. As gas is released to the chamber during expansion, a portion of the atmosphere is continuously removed with the expanded tobacco and separated therefrom. A portion of the separated atmosphere may be exhausted to ambient with the remainder recycled to the expansion chamber. The portion of the expansion chamber atmosphere exhausted to atmosphere may first be cooled to effect condensation and recovery of volatile organic materials evolved from the tobacco undergoing expansion. Such recovered materials may be added to expanded tobacco in later stages, e.g. reordering, of the tobacco treatment process.

The tobacco alkaloids, reaction products, and other compounds produced or volatilized during a tobacco expansion process may be flavor compounds that can be used to add flavor, aroma, or other sensory attributes to compositions such as e-liquid compositions.

One object of the present invention is to recover tobacco flavorants that are volatilized during tobacco processing. Such compounds are typically lost, or their content is reduced, with current tobacco processing methods. Another object is to provide compositions for use in heated aerosol-generating articles, which compositions include tobacco flavorants recovered during tobacco processing. The tobacco flavorants may provide flavor, aroma, or other sensory attributes to the compositions. Other objects of the present invention will be evident to those of skill in the art upon reading and understanding the present disclosure, which includes the claims that follow and accompanying drawings.

As used herein, "formulating" means adjusting concentration of components, such as nicotine, flavorants and humectants, to levels that meet tobacco control regulations and produce an acceptable experience to adults when used in an aerosol-generating device. Any composition described herein for use in an aerosol-generating device may be a formulated composition.

In various aspects of the present invention, a method is provided that includes volatilizing one or more tobacco-derived compounds into a gas stream and recovering a condensate comprising at least one of the one or more volatilized tobacco-derived compounds from the gas stream by techniques well known in the art. The method includes fractionating the recovered compounds by techniques well known in the art to selectively recover or enrich at least one of the one or more volatilized constituents or reaction products. Preferably at least one of the recovered tobacco-derived compounds is a tobacco flavorant. Volatilizing the tobacco-derived compounds may be done by raising the temperature of the tobacco in a tobacco expansion process, such as but not limited to a dry ice expansion tobacco ("DIET") process.

The method may further comprise introducing one or more of the recovered tobacco-derived compounds to an aerosol-generating composition for use in a heated aerosol-generating device.

Various aspects of the method of the present invention may have one or more advantages relative to currently available tobacco processing and processes for forming aerosol-generating compositions for use in heated aerosol-generating devices. For example, aspects of the method of the present invention recover tobacco flavorants, which may include key flavor compounds, during tobacco expansion processes rather than losing or burning such compounds as done with current tobacco expansion processes. Additional advantages of one or more aspects of the method described herein will be evident to those of skill in the art upon reading and understanding the present disclosure.

The method of the invention may be employed with any tobacco expansion process that results in volatilization of tobacco flavorants. As used herein, a "tobacco flavorant" is a tobacco-derived compound that produces an odor or flavor when smelled or tasted. A "tobacco-derived compound" is a compound naturally occurring in tobacco or a reaction product of naturally occurring tobacco compounds that may be generated during processing of tobacco. The tobacco-derived compounds, which may include tobacco flavorants, volatilized in a tobacco expansion process are carried in a gas stream. Tobacco flavorants may be recovered from the gas stream and used to provide odor, aroma, flavor, or other sensory attributes to various compositions.

Volatilization of tobacco-derived compounds can result from raising the temperature of a composition comprising tobacco. However, volatilization can occur without heating, and volatilized compounds may be captured in accordance with the method of the present invention. Volatilized tobacco-derived compounds may be captured and recovered from any suitable composition comprising tobacco constituents, such as dry tobacco compositions, tobacco suspensions, and the like. The volatilized tobacco-derived compounds are captured in a gas stream from which the compounds may be recovered. The volatilized compounds may be recovered by condensation. One or more tobacco flavorants volatilized in the gas stream may be selectively recovered, enriched, or both selectively recovered and enriched in one or more steps.

In various embodiments, the method of the invention includes subjecting a composition comprising tobacco to conditions that result in volatilization of a tobacco-derived compound into a gas stream, and recovering the tobacco-derived compound from the gas stream. The conditions to which the tobacco composition is subjected, in part, determines whether a tobacco-derived compound will be volatilized. It will be understood that temperature, gas stream flow rate, and pressure can affect the amount of a tobacco-derived compound that is volatilized into the gas stream. The same factors can also affect the number of different compounds that are volatilized into the gas stream. The vapor pressure of a tobacco-derived compound also contributes to whether the tobacco-derived compound will be volatilized under a given set of conditions.

Tobacco compositions that can be subjected to conditions in which tobacco-derived compounds are volatilized include dry tobacco compositions, suspensions containing tobacco, such as slurries, and the like. The term "tobacco" is used herein to indicate a *Nicotiana* species plant or one or more components of a *Nicotiana* species plant. The terms "tobacco" and *"Nicotiana* species" is used herein to indicate both a single species of *Nicotiana* and two or more species of *Nicotiana* forming a tobacco blend. "Tobacco" includes any component or subcomponent of a leaf, stem, stalk, flower, root, seed, or any other part of a *Nicotiana* species plant. Preferably, tobacco is tobacco cut filler. The term "tobacco cut filler" is used herein to indicate tobacco material that is predominately formed from the lamina portion of the tobacco leaf.

Tobacco compositions that can be subjected to conditions in which tobacco-derived compounds can be volatilized may include tobacco and a carrier. The carrier may be a solid, liquid or gas. If the carrier is a liquid, the composition may be a suspension. Examples of suitable liquid carriers for forming a suspension include water; ethanol; liquid carbon dioxide; Freon^{™} 11; ammonium carbonate; as well as supercritical fluids such as nitrogen, argon, helium, methane, propanol, pentane, and the like; or combinations of one or more of such liquid carriers. Preferably, the carrier impregnates the tobacco.

Examples of solid carriers include solid carbon dioxide, which is also known as dry ice. A preferred method to achieve a dry ice-tobacco composition is to contact the tobacco with liquid carbon dioxide under sufficiently high pressure to maintain the CO₂ in a liquid state and then to reduce pressure (such as to atmospheric pressure) to allow freezing of the CO₂, which occurs at about -78°C. Pressure sufficient to maintain the CO₂ in a liquid state, in some embodiments, is about 30 Bar (g). Preferably, the liquid CO₂ impregnates the tobacco. Preferably, the tobacco is submerged in the liquid CO₂ for an amount of time sufficient for the CO₂ to impregnate the tobacco, which may be from about 10 seconds to about 30 minutes, preferably about 15 minutes or less. Such impregnation is routinely carried out in DIET processes resulting in tobacco that is impregnated with non-gaseous carbon dioxide.

Preferably the temperature of a tobacco composition is increased and volatile constituents or reaction products are captured and carried in a gas stream. The tobacco composition may be heated at any suitable temperature. For example the tobacco composition may be heated at about 100°C to about 500°C; preferably at about 150°C to about 400°C; more preferably at about 180°C to about 300°C; even more preferably at about 220°C to about 290°C or at about 190°C to about 200°C. The tobacco composition may be contacted with a hot gas stream, where the hot gas is at a temperature of 100°C to about 500°C; preferably about 150°C to about 400°C; more preferably about 180°C to about 300°C; even more preferably about 220°C to about 290°C or about 190°C to about 200°C.

It will be understood that the temperature and other conditions to which a tobacco composition is subjected can affect the ratio of tobacco constituent reaction products to unreacted tobacco constituents. Accordingly, temperature and/or other conditions may be controlled to manipulate the ratio of unreacted to reacted constituents or the chemical composition of the resulting tobacco-derived compounds carried in a gas stream.

Examples of tobacco-derived compounds that can be carried in and recovered from a tobacco processing gas stream include alkenes, alkanes, alcohols, esters, terpenes, alkaloids, ketones, napthalines, cyclic ethers, ester alcohols, glycols, glycoethers, glycoesters, aldehydes, aromatic alcohols, cyclic aromatics, and the like. In some embodiments, tobacco-derived compounds include compounds resulting from Maillard reactions between reducing sugars and tobacco alkaloids. Some representative examples of tobacco-derived compounds that can be recovered from a tobacco processing gas stream were identified by experiments and presented below in Table 1.

**Table 1. Representative Examples of Tobacco-Derived Compounds and Classes that were detected in the tail gas stream of several DIET processes (S = previously found in smoke, T = previously found in tobacco; common names are provided in brackets)**

| Name | CAS | Class |
|---|---|---|
| Hexane (S,T) | 110-54-3 | Alkane |
| Heptane (S) | 142-82-5 | Alkane |
| Octane (S,T) | 111-65-9 | Alkane |
| Nonane (S,T) | 111-84-2 | Alkane |
| Decane (S,T) | 124-18-5 | Alkane |
| Undecane (S,T) | 1120-21-4 | Alkane |
| Dodecane (S,T) | 112-40-3 | Alkane |
| Tridecane (S,T) | 629-50-5 | Alkane |
| Tetradecane (S,T) | 629-59-4 | Alkane |
| Pentadecane (S,T) | 629-62-9 | Alkane |
| Hexadecane (S,T) | 544-76-3 | Alkane |
| Heptadecane (S,T) | 629-78-7 | Alkane |
| Octadecane (S,T) | 593-45-3 | Alkane |
| Nonadecan (S,T) | 629-92-5 | Alkane |
| Eicosane (S,T) | 112-95-8 | Alkane |
| 2-methyl-pentane, (S,T) | 107-83-5 | Alkane |
| 3-methyl-pentane (S,T) | 96-14-0 | Alkane |
| Methyl-cyclohexane (S,T) | 96-37-7 | Alkane |
| Cyclohexane (S) | 110-82-7 | Alkane |
| Hexane, 3-methyl- (S) | 589-34-4 | Alkane |
| Cyclohexane, methyl- (S) | 108-87-2 | Alkane |
| Heptane, 2,4-dimethyl- (T) | 2213-23-2 | Alkane |
| | | |
| 1-Heptene (T) | 592-76-7 | Alkene |
| 1-Octene (T) | 111-66-0 | Alkene |
| 1-Nonene (T) | 124-11-8 | Alkene |
| 1-Decene (S, T) | 872-05-9 | Alkene |
| 1-Undecene (T) | 821-95-4 | Alkene |
| 1-Dodecene (T) | 112-41-4 | Alkene |
| 1-Tridecene (T) | 2437-56-1 | Alkene |
| Cyclohexene, 4-ethenyl- (S) | 100-40-3 | Alkene |
| | | |
| Benzene (S,T) | 71-43-2 | Aromatic |
| Benzene, methyl- {toluene} (S,T) | 108-88-3 | Aromatic |
| Ethyl-benzene (S,T) | 100-41-4 | Aromatic |
| dimethyl-benzene (S,T) | 1330-20-7 | Aromatic |
| Benzene, 1 ,2-dimethyl- {o-xylene} (S,T) | 95-47-6 | Aromatic |
| Benzene, ethenyl- {styrene} (S, T) | 100-42-5 | Aromatic |
| Benzene, 1,3,5-trimethyl- {mesitylene} (S,T) | 108-67-8 | Aromatic |
| Benzene, 1,2,4-trimethyl- {pseudocumene} (S,T) | 95-63-6 | Aromatic |
| Benzene, 1 ,2,3-trimethyl- (S,T) | 526-73-8 | Aromatic |
| Benzene, (1-methylethyl)- {cumene} (S,T) | 98-82-8 | Aromatic |
| Propyl-benzene (S,T) | 103-65-1 | Aromatic |
| 1-ethyl-3-methyl- Benzene, (S,T) | 620-14-4 | Aromatic |
| 1-ethyl-4-methyl- Benzene, (S,T) | 622-96-8 | Aromatic |
| 1-ethyl-2-methyl- Benzene, (S,T) | 611-14-3 | Aromatic |
| Benzene, 1-methyl-4-(1-methylethyl)- {p-cymene} (S,T) | 99-87-6 | Aromatic |
| 1H-Indene, 2,3-dihydro- {indane} (S) | 496-11-7 | Aromatic |
| 1 ,2,4,5-tetramethyl- Benzene, (S) | 95-93-2 | Aromatic |
| Naphthalene, 1,2,3,4-tetrahydro- {tetralin} (S,T) | 119-64-2 | Aromatic |
| Naphthalene (S,T) | 91-20-3 | Aromatic |
| Naphthalene, 2-methyl- (S,T) | 91-57-6 | Aromatic |
| Naphthalene, 1-methyl- (S,T) | 90-12-0 | Aromatic |
| | | |
| Bicyclo[3.1.1]hept-2-ene, 2,6,6-trimethyl- {α-pinene} (S,T) | 80-56-8 | Terpenes |
| Bicyclo[3.1.1]heptane, 6,6-dimethyl-2-methylene- {β-pinene} (S,T) | 127-91-3 | Terpenes |
| Bicyclo[4.1.0]hept-3-ene, 3,7,7-trimethyl- (T) | 13466-78-9 | Terpenes |
| 1,3-Cyclohexadiene, 1-methyl-4-(1-methylethyl)- {α-terpinene} (S,T) | 99-86-5 | Terpenes |
| Cyclohexene, 1-methyl-4-(1-methylethenyl)-{limonene; p-mentha-1,8-diene} (S,T) | 138-86-3 | Terpenes |
| 2-Oxabicyclo[2.2.2]octane, 1,3,3-trimethyl-{eucalyptol; 1.8-cineole} (S,T) | 470-82-6 | Terpenes |
| 1,6-Octadien-3-ol, 3,7-dimethyl- {linalool} (S,T) | 78-70-6 | Terpenes |
| Bicyclo[2.2.1]heptan-2-one, 1,7,7-trimethyl-{camphor} (T) | 76-22-2 | Terpenes |
| Bicyclo[2.2.1]heptan-2-ol, 1,7,7-trimethyl-, endo-{borneol} (S,T) | 507-70-0 | Terpenes |
| 6-Octen-1-ol, 3,7-dimethyl- {dl-citronellol} (S,T) | 106-22-9 | Terpenes |
| 1,4-Methanoazulene, decahydro-4,8,8-trimethyl-9-methylene-, [1S-(1α,3aβ,4α,8aβ)]- (T) | 475-20-7 | Terpenes |
| Bicyclo[7.2.0]undec-4-ene, 4,11,11-trimethyl-8-methylene-, [1R-(1R*,4E,9S*)]- {β-caryophyllene} (T) | 87-44-5 | Terpenes |
| | | |
| 1-Propanol, 2-methyl- {isobutyl alcohol} (S,T) | 78-83-1 | Alcohols |
| 1-Butanol {n-butyl alcohol} (S,T) | 71-36-3 | Alcohols |
| 1-Hexanol, 2-ethyl- (S,T) | 104-76-7 | Alcohols |
| Benzenemethanol {benzyl alcohol} (S,T) | 100-51-6 | Alcohols |
| | | |
| Acetic acid, methyl ester (S,T) | 79-20-9 | Esters |
| Acetic acid, ethenyl ester {vinyl acetate} (S) | 108-05-4 | Esters |
| Acetic acid, ethyl ester {ethyl acetate} (S,T) | 141-78-6 | Esters |
| Acetic acid, 1-methylethyl ester (S,T) | 108-21-4 | Esters |
| 2-Propenoic acid, 2-methyl-, methyl ester (T) | 80-62-6 | Esters |
| Acetic acid, propyl ester {propyl acetate} (T) | 109-60-4 | Esters |
| Acetic acid, 2-methylpropyl ester {isobutyl acetate} (T) | 110-19-0 | Esters |
| Acetic acid, butyl ester {butyl acetate} (S,T) | 123-86-4 | Esters |
| Benzoic acid, methyl ester {methyl benzoate} (S,T) | 93-58-3 | Esters |
| Acetic acid, endo-1,7,7-trimethylbicyclo[2,2,1]heptan-2-yl ester {bornyl acetate} (T) | 76-49-3 | Esters |
| Benzoic acid, phenylmethyl ester {benzyl benzoate} (S, T) | 120-51-4 | Esters |
| | | |
| 2-Butanone {methyl ethyl ketone} (S,T) | 78-93-3 | Ketones |
| 2-Pentanone, 4-methyl- (S,T) | 108-10-1 | Ketones |
| Cyclohexanone (S) | 108-94-1 | Ketones |
| 3-Heptanone {ethyl butyl ketone} (S) | 106-35-4 | Ketones |
| 4-Heptanone, 2,6-dimethyl- (S) | 108-83-8 | Ketones |
| Ethanone, 1-phenyl- {acetophenone} (S,T) | 98-86-2 | Ketones |
| Methanone, diphenyl- {benzophenone} (S,T) | 119-61-9 | Ketones |
| | | |
| Furan, 2-methyl- (S,T) | 534-22-5 | Cyclic Ethers |
| Furan, tetrahydro- (S,T) | 109-99-9 | Cyclic Ethers |
| | | |
| Ethanol, 2-methoxy- (S,T) | 109-86-4 | Glycol Esters |
| 2-Propanol, 1-methoxy- (PGMM) (T) | 107-98-2 | Glycol Esters |
| 1 ,2-Ethanediol {ethylene glycol} (S,T) | 107-21-1 | Glycol Esters |
| Ethanol, 2-ethoxy- (S,T) | 110-80-5 | Glycol Esters |
| 2,4-Pentanediol, 2-methyl- (S,T) | 107-41-5 | Glycol Esters |
| | | |
| 1 ,2-Propanediol {propylene glycol} (PG) (S,T) | 57-55-6 | Glycols |
| Ethanol, 2-phenoxy- (T) | 122-99-6 | Glycols, Glycolether |
| | | |
| Butanal {butyraldehyde} (S,T) | 123-72-8 | Aldehydes |
| Pentanal {valeraldehyde} (S,T) | 110-62-3 | Aldehydes |
| Hexanal {caproic aldehyde} (S,T) | 66-25-1 | Aldehydes |
| Heptanal (S) | 111-71-7 | Aldehydes |
| Octanal (S,T) | 124-13-0 | Aldehydes |
| Nonanal {pelargonaldehyde} (S,T) | 124-19-6 | Aldehydes |
| Decanal {capraldehyde} (S,T) | 112-31-2 | Aldehydes |
| Undecanal (T) | 112-44-7 | Aldehydes |
| Benzaldehyde (S,T) | 100-52-7 | Aldehydes |
| 2-Furancarboxaldehyde {furfural; 2-furaldehyde} (S,T) | 98-01-1 | Aldehydes |
| | | |
| Tetradecanoic acid, 1-methylethyl ester (T) | 110-27-0 | fatty acid ester |
| | | |
| Benzothiazole {benzosulfonazole} (S,T) | 95-16-9 | Heterocycle |
| 2-Pyrrolidinone, 1-methyl- (S,T) | 872-50-4 | Heterocycle |
| | | |
| Pyridine, 3-(1-methyl-2-pyrrolidinyl)-, (S)- {I-nicotine} (S, T) | 54-11-5 | nicotine |
| BP: 244.4°C | | |
| Pyridine, 3-(3,4-dihydro-2H-pyrrol-5-yl)- {I-myosmine} (S,T) | 532-12-7 | nicotine-related |
| BP: 244.7°C | | |
| Pyridine, 3-(1-methyl-1H-pyrrol-2-yl)- {nicotyrine} (S,T) | 487-19-4 | nicotine-related |
| BP: 282.8°C | | |
| 2-Pyrrolidinone, 1-methyl-5-(3-pyridinyl)-, (S)-{cotinine} (S, T) | 486-56-6 | nicotine-related |
| BP: 316°C | | |
| 3-Pyridinecarbonitrile {3-Cyanopyridine} (S,T) | 100-54-9 | nicotine-related |
| BP : 201°C | | |
| | | |
| Pyrazine, methyl- = Pyrazine, 2-methyl (S, T) | 109-08-0 | Maillard |
| BP: 135.1°C | | |
| | | reaction |
| Pyrazine, ethyl- = Pyrazine, 2-ethyl- (S, T) | 13925-00-3 | Maillard reaction |
| BP: 154.9°C | | |
| Pyrazine, 2,3-dimethyl- (S, T) | 5910-89-4 | Maillard reaction |
| BP: 158.1°C | | |
| Pyrazine, 2-ethyl-6-methyl- = Pyrazine, 6-ethyl-2-methyl- (S, T)) | 13925-03-6 | Maillard reaction |
| BP: 170.2°C | | |
| Pyrazine, trimethyl- (S, T) | 14667-55-1 | Maillard reaction |
| BP: 171-172 °C | | |
| Pyrazine, 2-ethyl-5-methyl- (S, T) | 13360-64-0 | Maillard reaction |
| BP: 168-170°C | | |
| Pyrazine, dimethyethyl- (S,T) | 71607-73-3 | Maillard reaction |
| BP: 191.0 °C | | |

| | | |
|---|---|---|
| BP = Boiling point at 760 mmHg | | |

In some preferred embodiments, one or more of the following tobacco-derived terpenes is captured in, and recovered together or separately from, a gas stream: α-pinene, β-pinene, α-terpinene, limonene, eucalyptol, linalool, camphor, borneol, citronellol and β-canophyllene.

In some preferred embodiments, one or more of the following tobacco alkaloids is captured in and recovered together or separately from a gas stream: I-nicotine, I-myosmine, nicotyrine, cotinine, and 3-cyanopyridine.

In some preferred embodiments, one or more of the following tobacco-derived pyrazines, which are Maillard reaction products is captured in and recovered together or separately from a gas stream: 2-methyl-pyrazine, 2-ethyl-pyrazine, 2,3-dimethyl-pyrazine, 6-ethyl-2-methyl-pyrazine, trimethyl-pyrazine, 2-ethyl-5-methyl-pyrazine, and dimethyethyl-pyrazine. The tobacco-derived pyrazines are alkyl-substituted pyrazines, or alkylpyrazines. Examples of the alkyl group(s) include one or more methyl or ethyl groups, typically having boiling points in the range of 135°C to 191 °C.

In some preferred embodiments, the recovered tobacco-derived compounds comprise one or more terpenes, nicotine and one or more pyrazines.

In some preferred embodiments, a recovered tobacco-derived compound includes a terpene, a tobacco alkaloid, or an alkylpyrazines. Tobacco alkaloids are well known in the art and include nicotine and its derivatives which include many heterocyclic derivatives of pyridine; the heterocyclic group can be, for example, a pyrrolidinyl group. Examples of tobacco alkaloids include I-nicotine, I-myosmine, nicotyrine, cotinine, and 3-cyanopyridine.

Any suitable gas may be used to carry volatile tobacco compounds to a suitable recovery apparatus. Examples of suitable gases for use in a gas stream include air, CO₂, O₂, inert gas such as N₂, steam or combinations of one of more of air, CO₂, O₂, inert gas such as N₂, and steam. Preferably, the gas stream comprises steam. The gas may comprise steam and an inert gas, steam and air, or the like. Preferably, the steam concentration of the gas stream is in the range of about 70% to about 95%; more preferably about 80% to about 90%; more preferably from about 82% to about 85%.

In many embodiments, the process plant is being operated continuously, and thus the gas stream may have any suitable speed as it is transported within the conduits of the process plants. Preferably, the speed of the gas stream is in the range from about 10 meters per second (m/s) to about 100 m/s; more preferably from about 20 m/s to about 50 m/s; even more preferably from about 30 m/s to about 40 m/s. Preferably, the gas stream delivered at such speeds is a stream comprising steam.

Preferably, the method of the present invention recovers tobacco flavorants from a tobacco expansion process. Tobacco expansion processes include converting solid or liquid phase components into gas phase within a plant cell, thereby resulting in expanded tobacco. Tobacco expansion methods according to the present invention include impregnating tobacco with a solid or liquid carrier, such as a carrier described above, and heating to cause expansion. Heating may be accomplished by placing impregnated tobacco in a hot gas stream, such as a gas stream described above. Tobacco-derived compounds carried in the gas stream can be directed to recovery apparatus, where tobacco flavorants can be recovered.

One preferred tobacco expansion process is a dry ice expanded tobacco ("DIET") process. DIET processes include impregnating tobacco with carbon dioxide under pressure and solidifying the carbon dioxide. The dry ice impregnated tobacco is introduced into a heated process gas which results in rapid expansion of the carbon dioxide or hydrates of carbon dioxide, such as CO₂·6H₂O, and thus rapid expansion of the tobacco. The heated process gas can flow at any suitable velocity, such as in a range from about 10 meters/second to about 50 meters/second or other ranges as described above. The process gas may be at any suitable temperature, such as in a range from about 180°C to about 300°C or other ranges as described above. Any suitable process gas may be used, such as a gas comprising steam as described above. In a typical DIET process, waste gas is fed through an incinerator where tobacco-derived compounds in the waste gas stream are incinerated. By way of example, DIET processes can result in losses from the tobacco of reducing sugars in the range from about 5% to about 8% and result in losses of total alkaloids in the range from about 15% to greater than 20%. According to embodiments of the method described herein, tobacco-derived compounds are recovered before the waste gas is passed through an incinerator. This can be accomplished by redirecting a waste gas stream from the main process gas stream to recovery apparatus.

One preferred DIET process that may be employed or modified in accordance with the teachings presented herein is the AIRCO DIET process. Additional information on the AIRCO DIET process, plants and equipment can be found at the AIRCODIET website (aircodiet.com). More particular information regarding the AIRCO DIET process can be found in the AIRCO DIET publication, entitled "Dry Ice Expanded Tobacco" available at http://www.aircodiet.com/images/AIRCO DIET Process Description.pdf.

Tobacco-derived compounds may be recovered from a gas stream by condensation such as cryogenic condensation, rotary condensation, and the like.

Preferably, tobacco-derived compounds are recovered from a gas stream, such as a re-directed waste gas stream, by condensation to form a liquid mixture, suspension, solution, or the like. Any suitable condenser may be employed. Typically a condenser is operated at a temperature of about 10°C or less, preferably about 5°C, to condense water carried in the gas. The water may be derived from the tobacco composition, the gas stream, or both the tobacco composition and the gas stream. The condensed water may include tobacco-derived compounds. The de-watered inert gas that has been passed through the condenser may be fed to a cryogenic condenser to condense remaining tobacco-derived compounds as frost. The tobacco-derived compound-containing frost may then be recovered. Of course, cryogenic condensation may be employed without prior higher temperature condensation.

Condensation may be carried out using conventional techniques. For example, the gas stream may be led to a condenser system. The condenser system can be operated at a temperature sufficiently low to condense most of the tobacco compounds from the gas stream. A temperature of below about 50°C may be suitable although cooling to below 30°C is preferred. Preferably more than one condenser is used; each succeeding condenser being operated at a lower temperature than the previous condenser. Preferably the downstream-most condenser is operated at a temperature of about 0°C to about 10°C.

If it is desired to concentrate the tobacco-derived compounds using partial condensation, the gas stream may be subjected to a first condensation step at a high temperature; for example at about 80°C to about 95°C. This will result in the condensation of primarily water. The non-condensing and concentrated tobacco-derived compounds may then be subjected to a second condensation step at a lower temperature; for example at about 0°C to about 50°C to provide a composition comprising the tobacco-derived compounds.

The composition comprising the tobacco-derived compounds removed from the condenser system contains tobacco-derived compounds which may be used to provide flavor, aroma, or other sensory attributes to other compositions, such as aerosol-generating compositions for use in heated aerosol-generating smoking devices.

Tobacco-derived compounds that do not condense in the condenser system may be directed to a cryogenic condenser for collection. Many suitable cryogenic condensers are known and have been reported in the literature. Examples include the cryogenic condensers described in U.S. Pat. Nos. 5,182,926 and 5,323,623. Further details of the operation of such cryogenic condensers may be obtained from the disclosures in the patents. Of course other cryogenic aroma condensers may be used; for example those disclosed in U.S. Pat. No. 5,030,473. The tobacco-derived compounds collected in the cryogenic condenser is in the form of a frost. The frost may be used to flavor or to provide aroma or other attributes to compositions such as aerosol-generating compositions for use in heated aerosol-generating smoking devices. Alternatively, the frost may be combined with a suitable carrier substrate such as an oil or an oil-containing emulsion. This tobacco-derived compound-containing carrier can be conveniently added to compositions to provide flavor or the like.

If desired, the tobacco-derived compounds may be concentrated prior to being added to a composition to provide flavor, aroma or the like. Concentration may be carried out using conventional procedures such as partial condensation, rectification, membrane concentration and freeze concentration.

In embodiments, tobacco-derived compounds recovered from a gas stream may be passed through oil which can extract or absorb one or more of the tobacco-derived compounds. The tobacco-derived compound enhanced oil can be included in aerosol-generating compositions for use in heated aerosol-generating devices.

Compositions containing tobacco-derived compounds can be fractionated to form compositions having different constitution of tobacco-derived compounds. In some embodiments of the method of the present invention, fractionation can be accomplished by carrying out condensation of the gas stream composition at different temperatures to collect different fractions at different temperatures. It will be understood that a compound's vapor pressure or boiling point, or concentration, may affect the concentration of the compound in various fractions obtained via condensation at different temperatures. Compounds with similar vapor pressures or boiling points will tend to be present in the same fractions. Fractions may be subjected to testing for the presence of certain compounds that can serve as markers for other compounds that may be present in the fraction, regardless of the fractionation process employed. Boiling points of exemplary tobacco-derived compounds are provided in Table 1 and can be used to devise condensation or fractionation protocols by one of skill in the art.

Other fractionation processes that may be used include distillation, extraction, and the like. Preferably, fractionation is performed to obtain compositions having higher ratios of tobacco flavorants to non-flavorant tobacco-derived compounds.

The concentration of one or more tobacco-derived compound in a fraction or a composition can be enhanced through any suitable method, if desired.

One or more recovered tobacco-derived compounds or compositions, such as fractions, containing recovered tobacco-derived compounds may be included in an aerosol-generating composition for use in heated aerosol-generating device. Heated aerosol-generating devices include electronic cigarettes or electronic pipes that simulate one or more aspects of the act of tobacco smoking by producing an inhaled aerosol having the one or more of the appearance, the physical sensation, the flavor and the nicotine content of inhaled tobacco smoke.

Any suitable electronic smoking device may be employed. Typically electronic smoking devices include an atomizing element, for example, a nebulizer or atomizer, which uses heat to vaporize contents of a cartridge containing an aerosol-generating composition which is inhaled by a user. The cartridge containing the aerosol- generating composition or e-liquid typically contains a propylene glycol- or glycerin-based aqueous solution. The heating element can be controlled by a computer chip that is activated by the inhalation or "draw" of the user on the end of electronic smoking devices. The heating element and the computer chip can be operably coupled to a battery or other suitable power source. In many embodiments, the opposite end of electronic smoking devices will include a light that glows when the device is being "smoked" or drawn upon by the user to simulate the appearance of smoking.

Aerosol-generating devices may be of a single-use or disposable type, or may be refillable with liquid compositions or cartridges containing aerosol-generating compositions for use in heated aerosol-generating devices.

Embodiments of the present invention are directed to compositions for use in aerosol-generating devices that contain recovered tobacco-derived compounds, and cartridges for electronic smoking devices that contain compositions comprising recovered tobacco-derived compounds. In one aspect, a cartridge for an aerosol-generating device contains a liquid composition comprising a solvent or carrier and one or more recovered tobacco-derived compounds obtained by the method of the present invention as described above.

Aerosol-generating compositions for use in heated aerosol-generating devices may include any suitable amount of recovered tobacco-derived compounds obtained by the method of the present invention. In embodiments, the composition comprises between about 0.5% to about 15%, often from about 1% to about 10%. Unless otherwise clear from context, all percentages referred to herein are expressed as percent by weight based on the total weight of the composition. In some embodiments, the concentration of tobacco-derived compounds can be higher to allow for mixing of condensates, fractions, extracts or other such compositions containing recovered tobacco-derived products obtained by the method of the present invention with other compositions, such as flavor compositions, nicotine compositions, or the like by a consumer or a formulary.

Aerosol-generating compositions comprising one or more recovered tobacco-derived compounds obtained by the method of the present invention may contain other components, such as one or more of water, organic solvents, sweetening agents, flavoring agents, and the like. Examples of solvents that are commonly used in such aerosol-generating compositions include polyhydric alcohols such as 1,2-propylene glycol (PG or MPG); monohydric alcohols such as ethanol; ethyl acetate; glycerol and the like. The amount of water present typically ranges from about 0.1% to about 10%, usually from about 0.5% to about 5%. The cumulative total of one or more organic solvent present typically ranges from about 50% to about 99%, often from about 75% to about 95%. In a preferred embodiment, an aerosol-generating composition comprising one or more recovered tobacco-derived compounds obtained by the method of the present invention comprises polyethylene glycol in a range from about 25% to about 90% and comprises propylene glycol in a range from about 9% to about 50%. In some preferred embodiment, an aerosol-generating composition comprising one or more recovered tobacco-derived compounds obtained by the method of the present invention comprises polyethylene glycol and glycerol.

In some preferred embodiments, an aerosol-generating composition comprising one or more recovered tobacco-derived compounds obtained by the method of the present invention is formulated with one or more aqueous composition comprising nicotine, propylene glycol, glycerol or a combination of at least two or more of nicotine, propylene glycol and glycerol.

In some preferred embodiments, one or more recovered tobacco-derived compounds obtained by the method of the present invention are added to a base composition to form an aerosol-generating composition. Preferably, the base composition comprises propylene glycol, glycerol and water. For example, the base composition may comprise about 48% to about 68%, preferably about 58%, propylene glycol, about 25% to about 45%, preferably about 35%, glycerol, and about 2% to about 12%, preferably about 7%, water.

If desired, compositions comprising one or more recovered tobacco-derived compounds obtained by the method of the present invention may include one or more flavorants in addition to recovered tobacco-derived compounds that may be flavorants. Non-limiting examples of such additional flavorants include peppermint, menthol, wintergreen, spearmint, propolis, eucalyptus, cinnamon, or the like. The total amount of optional flavorants typically ranges from about 0.5% to about 15%, often from about 1% to about 10%.

Aerosol-generating compositions comprising one or more recovered tobacco-derived compounds obtained by the method of the present invention may contain any suitable amount of nicotine. For example, the compositions may contain 0% to about 30% nicotine. Preferably, the compositions comprise about 0.5% to about 18% nicotine.

All scientific and technical terms used herein have meanings commonly used in the art unless otherwise specified. The definitions provided herein are to facilitate understanding of certain terms used frequently herein.

As used herein, the singular forms "a", "an", and "the" encompass embodiments having plural referents, unless the content clearly dictates otherwise.

As used herein, "or" is generally employed in its sense including "and/or" unless the content clearly dictates otherwise. The term "and/or" means one or all of the listed elements or a combination of any two or more of the listed elements.

As used herein, "have", "having", "include", "including", "comprise", "comprising" or the like are used in their open ended sense, and generally mean "including, but not limited to". It will be understood that "consisting essentially of", "consisting of", and the like are subsumed in "comprising," and the like.

The words "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the disclosure, including the claims.

Reference to a particular compound herein includes salts, polymorphs, isomers, and hydrates of the compound unless the content clearly dictates otherwise.

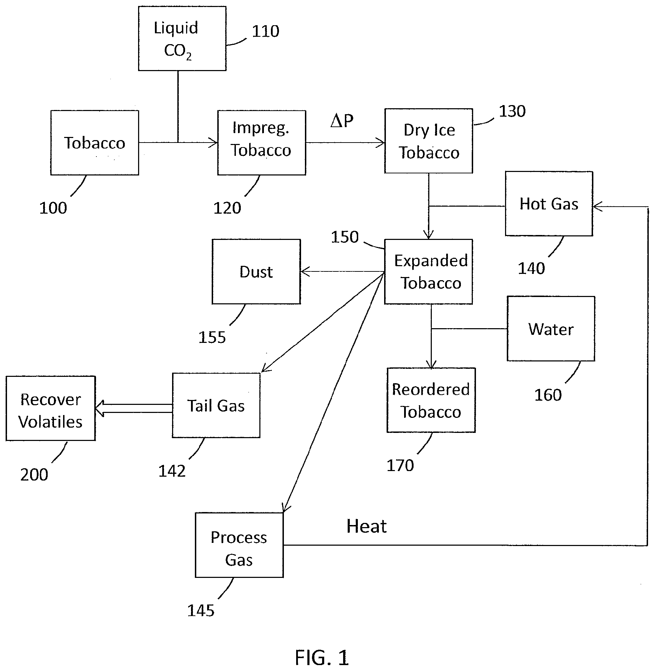

Referring now to **FIG. 1****,** schematic drawings are depicted that illustrate various aspects of a process for recovering volatile tobacco compounds from a DIET process and a smoking device that may include an e-liquid composition comprising such recovered tobacco compounds. The drawings are not necessarily to scale and are presented for purposes of illustration and not limitation. The drawings depict various aspects described in this disclosure. However, it will be understood that other aspects not depicted in the drawings fall within the scope of this disclosure.

**FIG. 1** is a schematic flow diagram illustrating a process for recovering volatile compounds from a DIET process.

Referring now specifically to **FIG. 1****,** a simplified overview of a DIET process in which volatile tobacco compounds are recovered is shown. The process includes contacting tobacco **100** with liquid carbon dioxide **110** to form liquid carbon dioxide impregnated tobacco **120** under pressure sufficient to maintain the carbon dioxide in liquid form. The pressure is then decreased, such as to atmospheric pressure, which results in freezing of the liquid carbon dioxide to form dry ice-impregnated tobacco **130.** The dry ice-impregnated tobacco **130** is contacted with hot gas **140** to result in expanded tobacco **150.** The resulting gas may be separated into tobacco dust **155,** process gas **145,** and tail gas **142** that contains volatile tobacco compounds. The process gas **145** may be heated and used as, at least a portion of, hot gas **140** in continued operation. The tail gas **142** is directed to recovery apparatus **200,** such as condensers or the like, where the volatile tobacco compounds are recovered. Water may be added to the expanded tobacco **150** to produce reordered tobacco **170** having a moisture content similar to the starting tobacco material **100.**

Thus, methods for RECOVERY OF TOBACCO CONSTITUENTS FROM PROCESSING are described. Various modifications and variations of the invention will be apparent to those skilled in the art without departing from the scope of the invention as defined in the claims. Although the invention has been described in connection with specific preferred embodiments, it should be understood that the invention as claimed should not be unduly limited to such specific embodiments.

## Claims

1. A method comprising:
volatilizing one or more tobacco-derived compounds into a gas stream; and
recovering a condensate comprising at least one of the one or more volatilized constituents or reaction products from the gas stream (142); and
fractionating the condensate to selectively recover or enrich at least one of the one or more volatilized constituents or reaction products.

2. A method according to claim 1, wherein volatilizing the one or more tobacco-derived compounds into the gas stream comprises heating tobacco impregnated with non-gaseous carbon dioxide by a gas stream comprising steam in a tobacco expansion process.

3. A method according to claim 2, wherein volatilizing the one or more tobacco-derived compounds into the gas stream comprises heating tobacco impregnated with non-gaseous carbon dioxide by a gas stream comprising steam, at a temperature at between about 150°C and about 400°C, in a tobacco expansion process.

4. A method according to claim 1 or 2, wherein recovering the at least one of the one or more volatilized compounds comprises condensing the gas stream at one or more temperature ranges.

5. A method according to claim 4, wherein recovering the at least one of the one or more volatilized compounds comprises leading the gas stream to a condenser system comprising more than one condenser, each succeeding condenser being operated at a lower temperature than the previous condenser.

6. A method according to claim 5, wherein recovering the at least one of the one or more volatilized compounds comprises subjecting the gas stream to a first condensation step at a temperature of about 80°C to about 95°C and then subjecting the gas stream to a second condensation step at a temperature of about 0°C to about 50°C.

7. A method according to claim 1, comprising passing the condensate recovered from the gas stream through oil to extract or absorb one or more of the one or more volatilized constituents or reaction products.

8. A method according to any one of claims 1 to 7, further comprising introducing one or more of the recovered tobacco-derived compounds to an aerosol-generating composition for use in a heated aerosol-generating smoking device.

9. A method according to claim 8, wherein the aerosol-generating composition comprises propylene glycol, glycerol and water.

## Patentansprüche

1. Verfahren, umfassend:
Verflüchtigen einer oder mehrerer aus Tabak gewonnener Verbindungen in einen Gasstrom; und
Rückgewinnen eines Kondensats, das wenigstens einen der einen oder mehreren verflüchtigten Bestandteile oder Reaktionsprodukte aus dem Gasstrom (142) umfasst; und
Fraktionieren des Kondensats, um wenigstens einen der verflüchtigten Bestandteile oder Reaktionsprodukte selektiv rückzugewinnen oder anzureichern.

2. Verfahren nach Anspruch 1, wobei das Verflüchtigen der einen oder mehreren aus Tabak gewonnenen Verbindungen in den Gasstrom das Erwärmen von mit nicht gasförmigem Kohlendioxid imprägniertem Tabak durch einen Dampf umfassenden Gasstrom in einem Tabakexpansionsverfahren umfasst.

3. Verfahren nach Anspruch 2, wobei das Verflüchtigen der einen oder mehreren aus Tabak gewonnenen Verbindungen in den Gasstrom das Erwärmen von mit nicht gasförmigem Kohlendioxid imprägniertem Tabak durch einen Dampf umfassenden Gasstrom bei einer Temperatur zwischen etwa 150 °C und etwa 400 °C in einem Tabakexpansionsverfahren umfasst.

4. Verfahren nach Anspruch 1 oder 2, wobei das Rückgewinnen der wenigstens einen der einen oder mehreren verflüchtigten Verbindungen das Kondensieren des Gasstroms in einem oder mehreren Temperaturbereichen umfasst.

5. Verfahren nach Anspruch 4, wobei das Rückgewinnen der wenigstens einen der einen oder mehreren verflüchtigten Verbindungen das Leiten des Gasstroms zu einem mehr als einen Kondensator umfassenden Kondensatorsystem umfasst, wobei jeder nachfolgende Kondensator bei einer niedrigeren Temperatur als der vorherige Kondensator betrieben wird.

6. Verfahren nach Anspruch 5, wobei das Rückgewinnen der wenigstens einen der einen oder mehreren verflüchtigten Verbindungen umfasst, dass der Gasstrom einem ersten Kondensationsschritt bei einer Temperatur von etwa 80 °C bis etwa 95 °C und anschließend einem zweiten Kondensationsschritt bei einer Temperatur von etwa 0 °C bis etwa 50 °C unterzogen wird.

7. Verfahren nach Anspruch 1, umfassend das Durchleiten des aus dem Gasstrom rückgewonnenen Kondensats durch Öl zum Extrahieren oder Absorbieren eines oder mehrerer der einen oder mehreren verflüchtigten Bestandteile oder Reaktionsprodukte.

8. Verfahren nach einem der Ansprüche 1 bis 7, ferner umfassend das Einbringen einer oder mehrerer der rückgewonnenen, aus Tabak gewonnenen Verbindungen in eine aerosolerzeugende Zusammensetzung zum Gebrauch in einer erwärmten, aerosolerzeugenden Rauchvorrichtung.

9. Verfahren nach Anspruch 8, wobei die aerosolerzeugende Zusammensetzung Propylenglykol, Glycerin und Wasser umfasst.

## Revendications

1. Procédé comprenant :
la volatilisation d'un ou de plusieurs composés dérivés du tabac dans un flux gazeux ; et
la récupération d'un condensat comprenant au moins l'un des un ou plusieurs constituants ou produits de réaction volatilisés issus du flux gazeux (142) ; et
le fractionnement du condensat pour récupérer ou enrichir sélectivement au moins l'un des constituants ou produits de réaction volatilisés.

2. Procédé selon la revendication 1, dans lequel la volatilisation des un ou plusieurs composés dérivés du tabac dans le flux gazeux comprend le chauffage du tabac imprégné de dioxyde de carbone non gazeux par un flux gazeux comprenant de la vapeur dans un procédé d'expansion de tabac.

3. Procédé selon la revendication 2, dans lequel la volatilisation des un ou plusieurs composés dérivés du tabac dans le flux gazeux comprend le chauffage du tabac imprégné de dioxyde de carbone non gazeux par un flux gazeux comprenant de la vapeur, à une température d'entre environ 150 °C et environ 400 °C, dans un procédé d'expansion de tabac.

4. Procédé selon la revendication 1 ou 2, dans lequel la récupération de l'au moins un parmi les un ou plusieurs composés volatilisés comprend la condensation du flux gazeux aux une ou plusieurs plages de températures.

5. Procédé selon la revendication 4, dans lequel la récupération de l'au moins un parmi les un ou plusieurs composés volatilisés comprend le fait de diriger le flux gazeux vers un système condenseur comprenant plus d'un condenseur, chaque condenseur suivant étant mis en fonctionnement à une température inférieure à celle du condenseur précédent.

6. Procédé selon la revendication 5, dans lequel la récupération de l'au moins un parmi les un ou plusieurs composés volatilisés comprend le fait de soumettre le flux gazeux à une première étape de condensation à une température d'environ 80 °C à environ 95 °C et ensuite le fait de soumettre le flux gazeux à une deuxième étape de condensation à une température d'environ 0 °C à environ 50 °C.

7. Procédé selon la revendication 1, comprenant le passage du condensat récupéré à partir du flux gazeux à travers de l'huile pour extraire ou absorber un ou plusieurs parmi les un ou plusieurs constituants ou produits de réaction volatilisés.

8. Procédé selon l'une quelconque des revendications 1 à 7, comprenant en outre l'introduction d'un ou de plusieurs des composés dérivés du tabac récupérés dans une composition de génération d'aérosol pour une utilisation dans un dispositif à fumer de génération d'aérosol chauffé.

9. Procédé selon la revendication 8, dans lequel la composition de génération d'aérosol comprend du propylèneglycol, du glycérol et de l'eau.
